# EUROPÄISCHE PATENTSCHRIFT

(11) **EP 1 466 520 B1**
(45) Veröffentlichungstag und Bekanntmachung des Hinweises auf die Patenterteilung: **26.07.2006**
(21) Anmeldenummer: 04008166.3
(22) Anmeldetag: 03.04.2004
(51) Int. Cl.: A01F 15/08

(54) **Rundballenpresse**
Roundballer
Presse à balles rondes

(30) Priorität: 08.04.2003 DE 10315918; 08.04.2003 DE 10315919
(43) Veröffentlichungstag der Anmeldung: 13.10.2004
(73) Patentinhaber: Welger Maschinenfabrik GmbH, D-38304 Wolfenbüttel (DE)
(72) Erfinder: Röhrbein, Jürgen, 38159 Wahle (DE); Rodewald, Peter, 38321 Neindorf (DE)

(56) Entgegenhaltungen:
- EP-A- 0 498 576
- DE-A- 3 409 713
- US-A- 4 240 339

## Beschreibung

Die Erfindung betrifft eine Rundballenpresse für landwirtschaftliche Halmgüter nach dem Oberbegriff des Patentanspruches 1.

Landwirtschaftliche Rundballenpressen werden über eine Zugdeichsel an einen Schlepper angehängt. Der übliche Antrieb erfolgt von der Schlepperzapfwelle über eine Gelenkwelle auf ein Hauptgetriebe, das in der Mitte zwischen den Seitenwänden der Rundballenpresse angeordnet ist. Das Hauptgetriebe ist als Kegelrad - Winkelgetriebe ausgebildet, von dem zumindest eine Querwelle abgeht zum Antrieb der Presselemente.

Bei einer durch die EP 0498576 A1 bekannten Rundballenpresse einer Bauart mit variablem Pressraum ist die Querwelle mit einem Verteilergetriebe verbunden, von dem eine Welle abgeht zum Antrieb einer oberhalb der Gutzuführöffnung im Vordergehäuse angeordneten Starterwalze und einer ebenfalls im Vordergehäuse unterhalb der Gutzuführöffnung angeordneten Boden-Presswalze. Das Verteilergetriebe weist außerdem eine zweite Welle auf, von der der Antrieb eines Presselementes erfolgt, das in diesem Fall von einem umlaufenden Förderbandsegment gebildet ist, das den Pressraum sowohl im Vorder- als auch im Hintergehäuse begrenzt. Die Eingangswelle des Hauptgetriebes wird mit der Zapfwellendrehzahl 540 ¹/min angetrieben. Um die Bauteile, insbesondere die Wellen, möglichst leicht dimensionieren zu können, erfolgt eine Drehzahlübersetzung ins Schnelle (von 540 ¹/min auf 1814 ¹/min) entweder durch ein Planetengetriebe im Verteilergetriebe oder durch ein dem Hauptgetriebe vorgeschaltetes Planetengetriebe. Anschließend erfolgt eine zweistufige Übersetzung ins Langsame durch Einzelgetriebe auf die von den einzelnen Organen benötigten Drehzahlen. Nachteilig ist vor allem die sehr ungleiche Lastverteilung, einerseits auf nur eine Boden-Presswalze bzw. eine Starterwalze und andererseits auf das sehr große Förderbandsegment als Presselement. Wahrscheinlich aufgrund des relativ hohen Bauaufwandes mit fünf Planetengetrieben ist eine derartige Ausführung in der Praxis bisher nicht eingeführt worden.

Für Rundballenpressen der sogenannten Festkammerbauart, deren Pressraum aus einer Vielzahl von einzelnen antreibbaren Presswalzen besteht-, ist eine derartige Konstruktion bisher nicht bekannt geworden.

Grundsätzlich sind die Anforderungen an die Antriebe von Landmaschinen in den letzten Jahren aufgrund verfügbarer Schlepperzapfwellenleistungen bis 100 kW erheblich angestiegen. Darüber hinaus ist auch der Leistungsbedarf bei Rundballenpressen, der neben der Bauart "Festkammer" oder "variable Kammer" insbesondere von der erreichbaren Pressdichte abhängig ist, ständig gestiegen. Trotzdem werden heute noch alle auf dem Markt befindlichen Rundballenpressen über Kettentriebe angetrieben. Lediglich bei Rundballenpressen der Fabrikate Ford-New Holland, siehe Prospekt "NEW HOLLAND" "Roll - Belt^{™} - Rundballenpresse Modell 650 mit dem Druckvermerk 7/92 und CLAAS Rollant 250 * 250 RF * 250RC * 250 RC Comfort, siehe Prospekt mit dem Druckvermerk 8/98, sind drei auf Schwenkarmen gelagerte Presswalzen gegenseitig durch Stirnradgetriebe gekoppelt, wobei eine der Presswalzen über eine Kette angetrieben wird. Die Stimradtriebe sind hier wegen des geringeren Platzbedarfes und der schlechten Zugänglichkeit gewählt worden.

Aufgrund der bekannten Nachteile von Ketten sind in den letzten Jahrzehnten zumindest in der Patentliteratur Lösungsvorschläge bekannt geworden, die jedoch offensichtlich über das Versuchsstadium nicht hinausgekommen sind und in der Praxis nicht eingeführt wurden. Genannt seien hier beispielsweise die Vorschläge des DE - U - 8428625 und der DE 3409713 A1. So weist die DE 3409713 A1 den entscheidenden Nachteil auf, dass alle Presselemente nur mit der gleichen Drehzahl antreibbar sind.

Der Erfindung liegt die Aufgabe zugrunde, die zahlreichen Nachteile der bekannten Antriebe von Rundballenpressen zu beseitigen und die Betriebssicherheit und Wartungsarmut durch einfache Gestaltung der Antriebe entscheidend zu verbessern.

Diese Aufgabe wird durch die im kennzeichnenden Teil des Patentanspruches 1 aufgeführten Merkmale gelöst. Hinsichtlich der weiteren Ausgestaltung der Erfindung wird auf die Ansprüche 2 bis 27 verwiesen.

Die erfindungsgemäße Antriebsübertragung zwischen den Verteilergetrieben ermöglicht durch die Kombination von offenen Zahnradgetrieben mit geschlossenen Verteilergetrieben erstmals einen völlig wartungsfreien und wesentlich betriebssicheren Antrieb der Presselemente bei Rundballenpressen. Darüber hinaus wird erstmals eine Leistungsverzweigung entsprechend dem unterschiedlichen Bedarf der einzelnen auf dem Pressraumumfang verteilten Presselemente, insbesondere dem Bedarf einzelner Presswalzengruppen erreicht. Diese dezentrale Bauweise ergibt kleiner dimensionierte Baugruppen, d.h. beanspruchungsgerecht auslegbare Antriebselemente, Verteilergetriebe und deren Lagerungen. Ein großer Vorteil besteht auch darin, dass die Schwenkachse des Hintergehäuses nicht mehr koaxial zu einer Presswalze angeordnet sein muss, sondern nahezu beliebig wählbar ist. Eine Grundvoraussetzung, um Leistungen mit hoher Drehzahl und kleinen Kräften auf die Presswalzen des Hintergehäuses zu übertragen. Bei allen auf dem Markt befindlichen Rundballenpressen mit Presswalzen erfolgt bisher die Kraftübertragung auf die Presswalzen des Hintergehäuses über die koaxial zur Schwenkachse des Hintergehäuses angeordnete Presswalze mittels eines Doppelkettenrades.

In weiterer Ausgestaltung der Erfindung ist vorgesehen, dass eine Abtriebswelle des ersten Verteilergetriebes über eine längenveränderbare Gelenkwelle mit einer Antriebswelle des zweiten Verteilergetriebes verbunden ist. Hierbei findet eine handelsübliche, erprobte Gelenkwelle Verwendung.

Günstige Laufverhältnisse der Gelenkwelle, d.h. insbesondere gleiche Beugewinkel auf beiden Seiten der Gelenkwelle während der Schwenkbewegung des Hintergehäuses werden dadurch erreicht, dass die Verteilergetriebe mit Bezug auf die Schwenkachse des Hintergehäuses spiegelbildlich angeordnet sind.

Einerseits ergeben sich einfache und baugleiche Verteilergetriebe für eine Leistungsverzweigung und andererseits sind günstige Bauteildimensionierungen gewährleistet, wenn wenigstens eine Abtriebswelle des ersten Verteilergetriebes mit der gleichen Drehzahl der Antriebswelle des ersten Verteilergetriebes umläuft. Besonders vorteilhaft ist dabei, dass die erste, zum zweiten Verteilergetriebe im Hintergehäuse führende Abtriebswelle eine einfache Fortführung der Antriebswelle des ersten Verteilergetriebes darstellt.

Eine insgesamt günstige Auslegung des gesamten Antriebes der Rundballenpresse mit möglichst wenigen Getrieben wird dann erreicht, wenn die Antriebswelle des ersten Verteilergetriebes die Hauptantriebswelle darstellt, welche über eine oder mehrere Gelenkwellen ohne Zwischenschaltung einer Übersetzungsstufe direkt mit der Zapfwelle eines Schleppers in Verbindung steht. Diesem Konzept liegt die Erkenntnis zugrunde, dass hohe Schlepperzapfwellenleistungen ohnehin vorzugsweise mit der 1000er Zapfwellendrehzahl übertragen werden, wodurch sich insgesamt kleinere Bauteile dimensionieren lassen. Bezüglich des Bauaufwands wird das gemäß dem Stand der Technik in der Mitte angeordnete Hauptgetriebe eingespart, in dem die Hauptantriebswelle von der Schlepperzapfwelle direkt in das seitlich angeordnete erste Verteilergetriebe mündet.

Nach einem weiteren Merkmal ist vorgesehen, dass zum leistungsverzweigten Antrieb der Presselemente innerhalb des Vordergehäuses und/oder innerhalb des Hintergehäuses dem ersten Verteilergetriebe und/oder dem zweiten Verteilergetriebe jeweils wenigstens ein weiteres Verteilergetriebe nachgeschaltet ist. Hierdurch lassen sich die Kräfte auf einzelne Presswalzen oder Gruppen von Presswalzen so verteilen, wie sie benötigt werden. Diesem Merkmal liegt die Erkenntnis zugrunde, dass der Kraftbedarf einzelner Presswalzen entlang des Pressraumumfanges unterschiedlich hoch ist. So fallen beispielsweise im Bodenbereich höhere Kräfte an als im oberen Bereich des Pressraumes.

In weiterer Ausgestaltung der Erfindung ist vorgesehen, dass zwischen Hauptantriebswelle und Presselement wenigstens zwei Übersetzungsstufen vorgesehen sind. Diesem Merkmal liegt der Grundgedanke zugrunde, möglichst viele Antriebsaggregate mit einfachen offenen und wartungsfreien Getrieben anzutreiben, deren Untersetzung vorzugsweise 1:2 betragen darf, da sonst die Gleitverhältnisse bei Trockenlauf zu ungünstig würden. Daraus ergibt sich dann für die Verteilergetriebe eine Untersetzung von 1000 auf 250 ¹/min, so dass die Presselemente eine Betriebsdrehzahl von 125 ¹/min besitzen. Die Verteilergetriebe sind dabei als geschlossene, mit Schmiermitteln befüllte Kegelradgetriebe ausgeführt, die einfach und wartungsfrei sind.

Eine besonders einfache Konstruktion, die eine einfache Montage und Demontage der Presselemente gewährleistet, wird dadurch erreicht, wenn mehrere Presselemente über offene Stirnradgetriebe gekoppelt sind. Dabei ist eine Montage bzw. Demontage eines Presselementes völlig unabhängig vom Antrieb dadurch gewährleistet, dass jeweils ein Stirnrad eines Stirnradgetriebes drehbar auf einem direkt oder indirekt an einer Seitenwand befestigten Lagerzapfen angeordnet ist.

Da jedes Verteilergetriebe nicht mehr auf die Gesamtleistung aller Presselemente, sondern nur noch auf den Leistungsbedarf der angeschlossenen Presselemente ausgelegt ist, weist jedes Verteilergetriebe zweckmäßigerweise eine Überlastsicherung auf, die eine einfache Scherbolzensicherung sein kann.

Um zu vermeiden, dass ein Presselement den Ballenausstoß behindert, wird erfindungsgemäß vorgeschlagen, dass wenigstens einem Verteilergetriebe bzw. dessen Antriebswelle eine Freilaufkupplung zugeordnet ist. Dadurch wird erreicht, dass die Umhüllung des Ballens unbeschädigt bleibt, wenn das sich öffnende Hintergehäuse den Ballen aus dem Vordergehäuse hebt und der Ballen versucht, beispielsweise die Boden-Presswalze zu beschleunigen, was durch den Freilauf ermöglicht wird.

Ein vorteilhafter Gesamtpressenantrieb besteht darin, dass der Antrieb für die Zubringerorgane wie Schneid-/ Förderrotor und/oder Pick-up in Kraftflussrichtung vor dem Verteilergetriebe vor der Hauptantriebswelle abgeleitet ist. Auch hier gewährleistet die dezentrale, leistungsverzweigte Antriebsbauweise kleiner dimensionierte Baugruppen, die ebenfalls einfach und wartungsfrei sind. Dabei kann der Antrieb der Zubringerorgane als separate Baugruppe oder teilweise mit integriert in das erste Verteilergetriebe sein.

Ein Ausführungsbeispiel der Erfindung ist in der Zeichnung dargestellt und wird im folgenden näher beschrieben. Es zeigt
- Fig. 1: eine Seitenansicht einer erfindungsgemäßen Rundballenpresse;
- Fig. 2: eine Ansicht nach Fig. 1 in geöffneter Stellung des Hintergehäuses, wobei der untere Teil der Rundballenpresse weggelassen ist,
- Fig. 3: eine Seitenansicht auf das Antriebssystem einer Rundballenpresse gemäß Fig. 1 und Fig. 2, wobei zur Verdeutlichung die Rundballenpresse selbst weggelassen wurde;
- Fig. 4: eine Schnittansicht in Blickrichtung der Pfeile X auf die im Hintergehäuse angeordneten Antriebe gemäß Fig. 3 und
- Fig. 5: eine Draufsicht auf die rechte Hälfte einer Rundballenpresse gemäß Fig. 1 mit komplettem Antriebsstrang bis zur Schlepperzapfwelle.

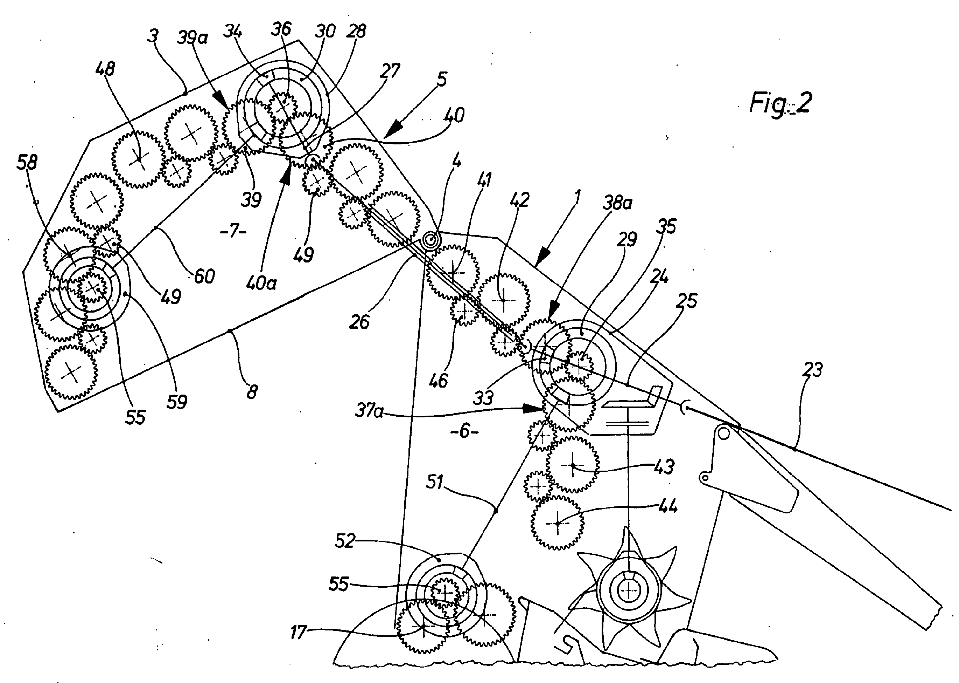

Die dargestellte Rundballenpresse besitzt ein zweiteiliges Pressraumgehäuse, bestehend aus einem Vordergehäuse 1, welches gestellfest auf einem Fahrgestell 2 ruht und einem Hintergehäuse 3, welches nach Formung eines Ballens um eine horizontale obere Schwenkachse 4 zum Ballenausstoß in eine Entladestellung 5 (Fig.2) aufklappbar ist.

Das Vordergehäuse 1 weist zwei Seitenwände 6 auf, die durch Querverbindungen miteinander verbunden sind. Das Hintergehäuse 3 besitzt zwei Seitenwände 7. Diese liegen mit einer Vorderkante 8 in geschlossener Stellung 9 an den Seitenwänden 6 des Vordergehäuses 1 an. Am Vordergehäuse 1 greift ein Zugglied 10 an zur Verbindung mit einem nicht dargestellten Schlepper, welcher die Rundballenpresse in durch Pfeil 11 gekennzeichnete Richtung über das Feld zieht.

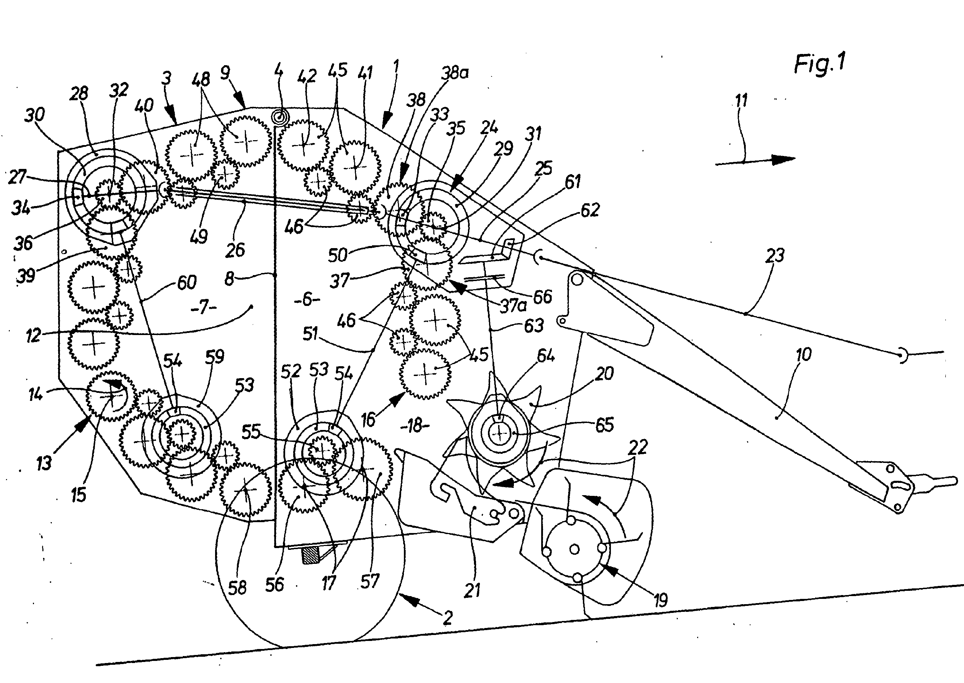

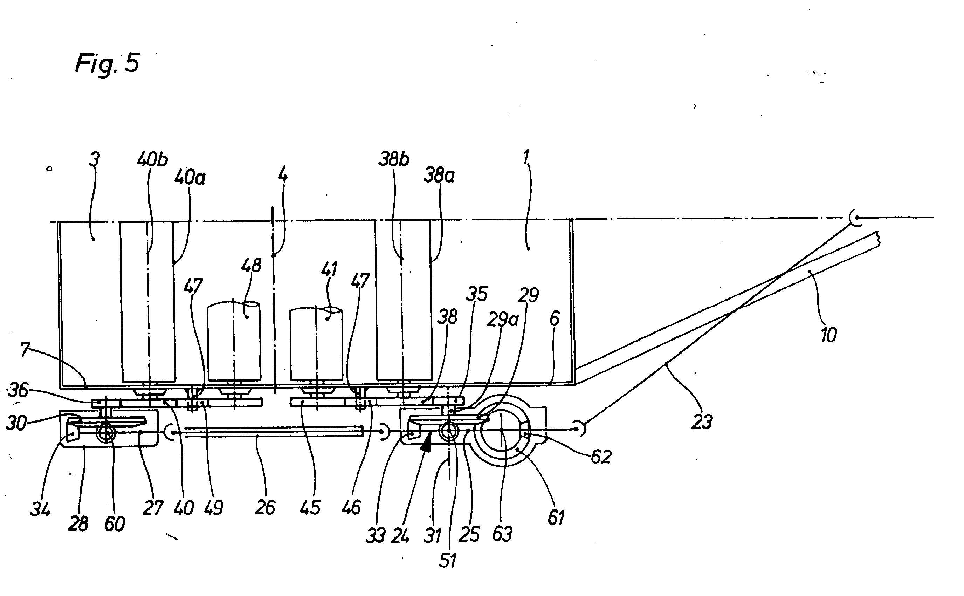

Im Pressraumgehäuse wird ein Pressraum 12 gebildet, der in diesem Ausführungsbeispiel einen konstanten Durchmesser besitzt. Der Pressraum 12 wird umfangsseitig von rotierend antreibbaren Presselementen begrenzt, die in diesem Ausführungsbeispiel in den Seitenwänden 6, 7 gelagerte Presswalzen 13 (Fig.5) sind, aber auch von Riemen, Stabkettenförderern oder Kombinationen davon gebildet werden können. Die gemeinsame Umlaufrichtung der Presswalzen 13 ist durch Pfeil 14 gekennzeichnet. In den Figuren 1 bis 4 sind vereinfacht nur die Drehachsen 15 der Presswalzen 13 dargestellt, um Überschneidungen zu vermeiden. In den Zeichnungen ist im folgenden deshalb jeweils die Drehachse der Presswalze statt der Presswalze mit der Bezugslinie gekennzeichnet.

Zwischen einer oberen Presswalze 16 und einer Boden- Presswalze 17 ist eine Zuführöffnung 18 für Halmgut freigelassen. Mit einer an sich bekannten Pick-up 19 (Aufnahmeeinrichtung) hebt die Rundballenpresse Halmgut vom Boden auf und fördert es gegebenenfalls durch eine Schneideinrichtung, bestehend aus einem Förder- / Schneidrotor 20 und Schneidmessern 21, in die Zuführöffnung 18 des Pressraumes 12. Während des Betriebes laufen Pick-up 19 und Förder- / Schneidrotor 20 in durch Pfeile 22 gekennzeichnete Richtungen um.

Die Kraftübertragung erfolgt von einer nicht dargestellten Schlepperzapfwelle aus über eine oder mehrere Gelenkwellen 23 auf ein erstes Verteilergetriebe 24. Das Verteilergetriebe 24 ist auf der in Fahrtrichtung gesehen rechten Seite der Rundballenpresse im Abstand oberhalb der Gutzuführöffnung 18 an der Seitenwand 6 des Vordergehäuses 1 befestigt. Die Befestigung kann aber auch über einen Hilfsrahmen oder am Pressenrahmen im Bereich der Seitenwand 6 erfolgen.

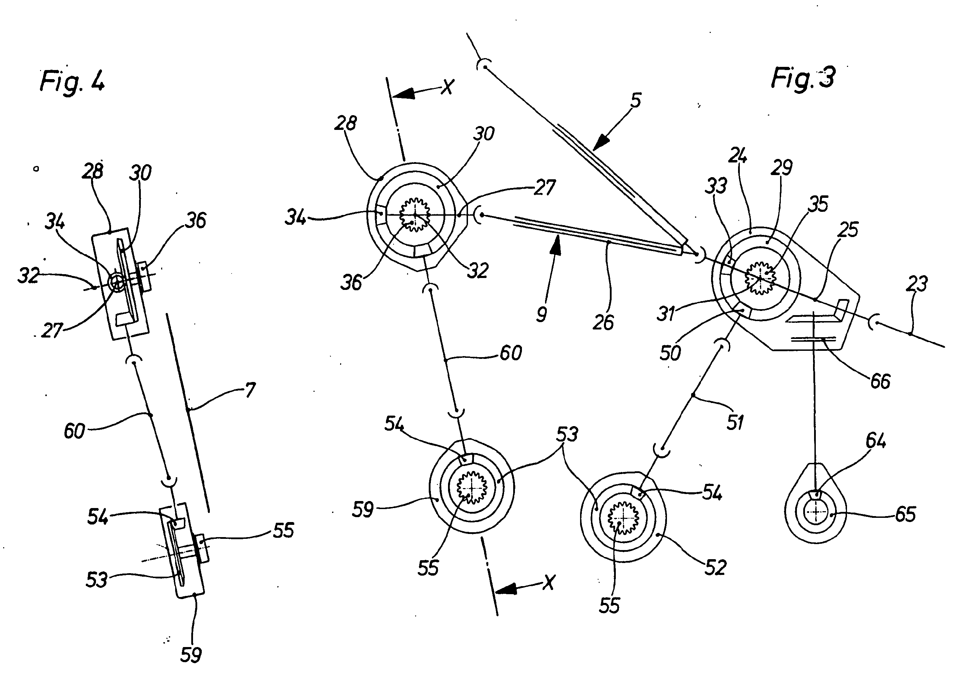

Im Verteilergetriebe 24 ist eine Hauptantriebswelle 25 mit in Maschinenlängsachse verlaufender Drehachse gelagert. Die Hauptantriebswelle 25 ist nach hinten als Verlängerung aus dem Verteilergetriebe 24 herausgeführt und mit einer längenveränderbaren Gelenkwelle 26 verbunden, welche an die Antriebswelle 27 eines zweiten Verteilergetriebes 28 angeschlossen ist, das an der Seitenwand 7 des Hintergehäuses 3 befestigt ist. Die Verteilergetriebe 24, 28 sind bis auf die Gehäuse baugleich und spiegelbildlich mit Bezug auf die durch die Schwenkachse 4 gelegte Teilungsebene von Vorder- 1 und Hintergehäuse 3 angeordnet. Dadurch schließt die Gelenkwelle 26 während des Öffnens des Hintergehäuses 3 und in wie in Fig. 3 gezeigter geöffneter Stellung 5 des Hintergehäuses 3 ständig gleiche Beugewinkel mit deren An- bzw. Abtriebswelle 25, 27 ein.

In jedem Verteilergetriebe 24, 28 ist ein Tellerrad 29, 30 mit waagerechter, quer zur Maschinenlängsachse verlaufender Drehachse 31, 32 gelagert. Das Tellerrad 29 des ersten Verteilergetriebes 24 steht mit einem auf der Hauptantriebwelle 25 befestigten, im Verteilergetriebe 24 gelagerten Antriebsritzel 33 im Eingriff und bildet eine erste Untersetzungsstufe von beispielsweise 1:4. Das Tellerrad 30 des zweiten Verteilergetriebes 28 steht mit einem Antriebsritzel 34 im Eingriff, das auf der im zweiten Verteilergetriebe 28 gelagerten Antriebswelle 27 befestigt ist, die über die Gelenkwelle 26 mit der Drehzahl der Hauptantriebswelle 25 angetrieben wird und die gleiche Untersetzungsstufe aufweist. Jedes Tellerrad 29, 30 trägt an seinem Wellenstummel 29a ein Stirnrad 35, 36, welches jeweils mit auf zwei benachbarten Presswalzen 37a, 38a, 39a, 40a befestigten Stirnrädern 37, 38; 39, 40 kämmt und eine zweite Untersetzungsstufe von 1:2 darstellt. Zwei oberhalb der direkt angetriebenen Presswalze 37a angeordnete Presswalzen 41, 42 und zwei unterhalb der direkt angetriebenen Presswalze 38a angeordnete Presswalzen 43, 44 tragen ebenfalls Stirnräder 45. Die Kopplung dieser Presswalzen 41 bis 44 mit den direkt angetriebenen Presswalzen 37a, 38a erfolgt durch Stirnräder 46, die drehbar auf ortsfest an der Seitenwand 6 befestigten Lagerzapfen 47 gelagert sind. In gleicher Weise erfolgt der Antrieb der oberen sechs im Hintergehäuse 3 gelagerten Presswalzen 39a, 40a, 48 über das angetriebene Stirnrad 36 und ortsfest aber drehbar an der Seitenwand 7 des Hintergehäuses 3 gelagerte Stirnräder 49, die die Presswalzen 48 koppeln. In Fig. 5 sind die Drehachsen der Presswalzen 38a, 40a mit den Ziffern 38b und 40b gekennzeichnet. Alle Stirnradgetriebe 35 bis 40 und 45, 46, 49 sind als offene Getriebe ausgebildet und wartungsfrei.

Das Tellerrad 29 des ersten Verteilergetriebes 24 steht mit einem zweiten Kegelrad 50 im Eingriff, das auf einer Abtriebswelle 51 sitzt, die zu einem im unteren Bereich des Vordergehäuses 1 an dessen Seitenwand 6 befestigten Verteilergetriebe 52 führt, von dem der Antrieb zweier Boden-Presswalzen 17 abgeleitet ist. Der Antrieb dieser Boden-Presswalzen 17 erfolgt in gleicher Weise wie der Antrieb der oberen Presswalzen 37a, 38a über ein Kegelradgetriebe 53, 54 mit einer Untersetzung von 1:4 und ein offenes Stirnradgetriebe 55, 56, 57 mit einer Untersetzung von 1:2. In der Abtriebswelle 51 ist eine nicht dargestellte Freilaufkupplung angeordnet, die eine Drehung der Boden- Presswalze 17 in Richtung des Pfeiles 14 durch den Ballen zulässt, wie es beim Ballenausstoß auftreten kann.

In gleicher Art und Weise werden die unteren vier im Hintergehäuse 3 angeordneten Presswalzen 58 durch ein an der Seitenwand 7 des Hintergehäuses 3 angeordnetes Verteilergetriebe 59 über eine vom zweiten Verteilergetriebe 28 kommende Abtriebswelle 60 angetrieben. Das untere Verteilergetriebe 59 des Hintergehäuses 3 ist baugleich zu dem unteren Verteilergetriebe 52 des Vordergehäuses 1.

Alle Verteilergetriebe 24, 28, 52, 59 sind als geschlossene, mit Schmiermittel befüllte Getriebe ausgeführt und damit wartungsfrei.

Jedes Verteilergetriebe 24, 28, 52, 59 ist nur noch auf den Leistungsbedarf der jeweils angeschlossenen Presswalzen ausgelegt. Um bei Blockierungen eines Bauteiles Schäden in den Antrieben zu vermeiden, weist jedes Verteilergetriebe eine nicht dargestellte Überlastsicherung, beispielsweise eine an sich bekannte Scherbolzensicherung auf.

In diesem Ausführungsbeispiel ist in dem ersten Verteilergetriebe 24 ein Tellerrad 61 mit vertikaler Drehachse gelagert, das mit einem auf der Hauptantriebswelle 25 sitzenden Antriebsritzel 62 im Eingriff steht. Die Abtriebswelle 63 des Tellerrades 61 führt zu einem ebenfalls geschlossenen Kegelradgetriebe 64, 65, von welchem der Förder-/ Schneidrotor 20 angetrieben wird. In der Abtriebswelle 63 ist eine schaltbare Überlastkupplung 66 angeordnet, die beispielsweise beim Ansprechen der Überlastsicherung eines Verteilergetriebes 24, 28, 52, 59 sofort die Gutzufuhr unterbricht. Das Kegelradgetriebe 61, 62 kann auch separat vom ersten Verteilergetriebe 24 ausgebildet und angeordnet sein.

Die mit der Erfindung erzielten Vorteile bestehen insbesondere darin, dass durch die Kombination von einfachen geschlossenen Verteilergetrieben mit einfachen offenen Zahnradgetrieben einerseits eine bedarfsgerechte Leistungsverzweigung auf die Presswalzen und andererseits eine einfache und wartungsfreie Bauweise gewährleistet ist. Die Leistungsverzweigungen ermöglichen kleiner dimensionierte Baugruppen. Insgesamt stellt die Erfindung eine wirtschaftliche Gesamtkonstruktion dar, auch aufgrund der hohen Betriebssicherheit, des niedrigen Verschleißes und des geringsten Wartungsbedarfes. Vorteilhaft ist auch die einfache Montage und Demontage der einzelnen vormontierten Presswalzen in Modulbauweise.

Während des Betriebes werden alle Presswalzen in durch Pfeil 14 gekennzeichnete Richtung mit gleicher Walzenumfangsgeschwindigkeit angetrieben. Darüber hinaus ermöglicht diese Konstruktion auf besonders einfache Weise durch Wahl des Übersetzungsverhältnisses eine Variation der Drehzahlen der auf dem Presskammerumfang verteilten Presswalzen oder Presswalzengruppen. So lässt sich z.B. mit einer Anhebung der Walzenumfangsgeschwindigkeit in Teilbereichen des Presskammerumfangs eine höhere Kraftschlussbeanspruchung an den geringer belasteten Presswalzen erzielen, wodurch eine Erhöhung der Pressdichte möglich ist.

## Patentansprüche

1. Rundballenpresse für landwirtschaftliche Halmgüter, deren Pressraum (12) umfangsseitig durch antreibbare Presselemente (17, 37a, 38a, 39a, 40a, 41 bis 44, 48, 58) und stirnseitig durch zweigeteilte Seitenwände (6, 7) begrenzt wird, mit einem Pressraumgehäuse bestehend aus einem gestellfesten Vordergehäuse (1) und einem an diesem um eine horizontale Schwenkachse (4) aufklappbar gelagerten Hintergehäuse (3), wobei der Antrieb der Presselemente (37a, 38a) des Vordergehäuses (1) von wenigstens einem im Bereich der Seitenwand (6) des Vordergehäuses (1) angeordneten ersten Verteilergetriebe (24) abgeleitet wird und der Antrieb der Presselemente (39a, 40a, 48, 58) des Hintergehäuses (3) durch wenigstens ein zweites an der Seitenwand (7) des Hintergehäuses (3) angeordnetes Verteilergetriebe (28) erfolgt, **dadurch gekennzeichnet, dass** Mittel (26) vorgesehen sind zur Antriebsübertragung von dem ersten Verteilergetriebe (24) auf das zweite Verteilergetriebe (28), welche zusätzlich zum Rotationsantrieb wenigstens einen translatorischen Freiheitsgrad aufweisen.

2. Rundballenpresse nach Anspruch 1, **dadurch gekennzeichnet, dass** eine Abtriebswelle (25) des ersten Verteilergetriebes (24) über eine längenveränderbare Gelenkwelle (26) mit einer Antriebswelle (27) des zweiten Verteilergetriebes (28) verbunden ist.

3. Rundballenpresse nach einem der vorhergehenden Ansprüche, **dadurch gekennzeichnet, dass** die Verteilergetriebe (24, 28) mit Bezug auf die Schwenkachse (4) des Hintergehäuses (3) spiegelbildlich angeordnet sind.

4. Rundballenpresse nach einem oder mehreren der vorhergehenden Ansprüche, **dadurch gekennzeichnet, dass** wenigstens eine Abtriebswelle (26) des ersten Verteilergetriebes (24) mit der gleichen Drehzahl der Antriebswelle (25) des ersten Verteilergetriebes (24) umläuft.

5. Rundballenpresse nach einem oder mehreren der vorhergehenden Ansprüche, **dadurch gekennzeichnet, dass** die Antriebswelle (25) des ersten Verteilergetriebes (24) die Hauptantriebswelle darstellt, welche über eine oder mehrere Gelenkwellen (23) ohne Zwischenschaltung einer Übersetzungsstufe direkt mit der Zapfwelle eines Schleppers in Verbindung steht.

6. Rundballenpresse nach einem oder mehreren der vorhergehenden Ansprüche, **dadurch gekennzeichnet, dass** zum leistungsverzweigten Antrieb der Presselemente (37a, 38a, 41 bis 44 und 17; 39a, 40a, 48 und 58) innerhalb des Vordergehäuses (1) und/oder innerhalb des Hintergehäuses (3) dem ersten Verteilergetriebe (24) und/oder dem zweiten Verteilergetriebe (28) jeweils wenigstens ein weiteres Verteilergetriebe (52, 59) nachgeschaltet ist.

7. Rundballenpresse nach einem oder mehreren der vorhergehenden Ansprüche, **dadurch gekennzeichnet, dass** das erste Verteilergetriebe (24) neben der zum zweiten Verteilergetriebe (28) führenden ersten Abtriebswelle (26) wenigstens eine weitere Abtriebswelle (51) aufweist.

8. Rundballenpresse nach Anspruch 7, **dadurch gekennzeichnet, dass** eine zweite Abtriebswelle (51) zum Antrieb eines oder mehrerer unterhalb einer Gutzufuhröffnung (18) angeordneten/r Presselementes/e (17) dient, während eine dritte Abtriebswelle (29a, 35) die oberhalb der Gutzufuhröffnung (18) angeordneten Presselemente (37a, 38a, 41 bis 44) antreibt.

9. Rundballenpresse nach einem oder mehreren der vorhergehenden Ansprüche, **dadurch gekennzeichnet, dass** zwischen Hauptantriebswelle (25) und Presselement (17, 37a, 38a, 39a, 40a, 41 bis 44, 48, 58) wenigstens zwei Übersetzungsstufen vorgesehen sind.

10. Rundballenpresse nach einem oder mehreren der vorhergehenden Ansprüche, **dadurch gekennzeichnet, dass** jedes Verteilergetriebe (24, 28, 52, 59) wenigstens eine Übersetzungsstufe aufweist.

11. Rundballenpresse nach Anspruch 10, **dadurch gekennzeichnet, dass** jedes Verteilergetriebe (24, 28, 52, 59) wenigstens ein Kegelradgetriebe (29, 33, 30, 34, 53, 54) als Übersetzungsstufe aufweist.

12. Rundballenpresse nach einem oder mehreren der vorhergehenden Ansprüche, **dadurch gekennzeichnet, dass** jedem Presselement (17, 37a, 38a, 39a, 40a, 41 bis 44, 48, 58) direkt eine Getriebeübersetzungsstufe (35, 36, 37 bis 40, 45, 46, 49, 55, 56, 57) zugeordnet ist.

13. Rundballenpresse nach Anspruch 12, **dadurch gekennzeichnet, dass** jedes Presselement über wenigstens ein Zahnradgetriebe antreibbar ist.

14. Rundballenpresse nach einem oder mehreren der vorhergehenden Ansprüche, **dadurch gekennzeichnet, dass** jedes Verteilergetriebe (24, 28, 52, 59) ein mit der Antriebswelle (25, 27, 51, 60) über ein Kegelradritzel (33, 34, 54) im Eingriff stehendes Tellerrad (29, 30, 53) aufweist, welches mit einer Abtriebswelle verbunden ist, auf welcher ein Stirnrad (35, 36, 55) eines Stirnradgetriebes (37 bis 40, 45, 46, 49, 55, 56, 57) eines Presselementes (17, 37a, 38a, 39a, 40a, 41 bis 44, 48, 58) befestigt ist.

15. Rundballenpresse nach einem oder mehreren der vorhergehenden Ansprüche 6 bis 14, **dadurch gekennzeichnet, dass** eine Antriebswelle (51, 60) eines weiteren Verteilergetriebes (52, 59) über ein Kegelradritzel (54) mit dem Tellerrad (53) kämmt und in Umfangsrichtung winkelversetzt zur Antriebswelle (27) bzw. zur Hauptantriebswelle (25) angeordnet ist.

16. Rundballenpresse nach Anspruch 14, **dadurch gekennzeichnet, dass** wenigstens eine Abtriebswelle (35, 36, 55) eines Verteilergetriebes (24, 28, 52, 59) parallel und achsversetzt zur Drehachse (38b, 40b) eines oder mehrerer Presselementes/e (37a, 38a, 39a, 40a) angeordnet ist.

17. Rundballenpresse nach einem oder mehreren der vorhergehenden Ansprüche, **dadurch gekennzeichnet, dass** mehrere Presselemente (41, 42) über offene Stirnradgetriebe (45, 46) gekoppelt sind.

18. Rundballenpresse nach Anspruch 17, **dadurch gekennzeichnet, dass** jeweils ein Stirnrad (46) eines Stirnradtriebes (45, 46) drehbar auf einem direkt oder indirekt an einer Seitenwand (6) befestigten Lagerzapfen (47) angeordnet ist.

19. Rundballenpresse nach einem oder mehreren der vorhergehenden Ansprüche, **dadurch gekennzeichnet, dass** ein oder mehrere Verteilergetriebe (24, 28, 52, 59) geschlossene, mit Schmiermittel befüllte Getriebegehäuse aufweisen.

20. Rundballenpresse nach einem oder mehreren der vorhergehenden Ansprüche, **dadurch gekennzeichnet, dass** die Verteilergetriebe (24, 28 und 52, 59) im Wesentlichen baugleich ausgeführt sind.

21. Rundballenpresse nach einem oder mehreren der vorhergehenden Ansprüche, **dadurch gekennzeichnet, dass** jedes Verteilergetriebe (24, 28, 52, 59) eine Überlastsicherung aufweist.

22. Rundballenpresse nach einem oder mehreren der vorhergehenden Ansprüche, **dadurch gekennzeichnet, dass** wenigstens einem Verteilergetriebe (52) bzw. dessen Antriebswelle (51) eine Freilaufkupplung zugeordnet ist.

23. Rundballenpresse nach einem oder mehreren der vorhergehenden Ansprüche, **dadurch gekennzeichnet, dass** eine oder mehrere An- bzw. Abtriebswellen (51) ohne Kreuzgelenke ausgeführt sind.

24. Rundballenpresse nach einem oder mehreren der vorhergehenden Ansprüche, **dadurch gekennzeichnet, dass** der Antrieb für die Zubringerorgane wie Schneid-/ Förderrotor (20) und/oder Pick-up (19) in Kraftflussrichtung vor dem Verteilergetriebe (24) von der Hauptantriebswelle (25) abgeleitet ist.

25. Rundballenpresse nach Anspruch 24, **dadurch gekennzeichnet, dass** der Antrieb des Schneid-/Förderrotors (20) über zwei Kegelradgetriebe (61, 62, 64, 65) erfolgt, die durch eine Welle (63) unter Zwischenschaltung einer Überlastkupplung (66) miteinander verbunden sind oder durch einen oder mehrere Stirnradtreibe oder durch eine Kombination von Kegelrad- oder Stirnradgetrieben.

26. Rundballenpresse nach einem oder mehreren der vorhergehenden Ansprüche, **dadurch gekennzeichnet, dass** die Presselemente als in den Seitenwänden (6, 7) ortsfest aber drehbar angeordnete Presswalzen (17, 37a, 38a, 39a, 40a, 41 bis 44, 48, 58) oder schwenkbare Walzengruppen ausgebildet sind.

27. Rundballenpresse nach einem oder mehreren der vorhergehenden Ansprüche, **dadurch gekennzeichnet, dass** eine oder mehrere Presswalzen in Teilbereichen des Presskammerumfanges unterschiedliche Walzenumfangsgeschwindigkeiten aufweisen.

## Claims

1. A round baler for agricultural produce, the baling chamber (12) of which is bounded circumferentially by drivable baling members (17, 37a, 38a, 39a, 40a, 41 to 44, 48, 58) and at the ends by bipartite side walls (6, 7), with a baling-chamber housing comprising a front housing (1) fixed to a frame, and a rear housing (3) which is mounted on the front housing (1) so that it can be pivoted open about a horizontal pivoting axis (4), wherein the drive of the baling members (37a, 38a) of the front housing (1) is derived from at least one first power divider (24) arranged in the region of the side wall (6) of the front housing (1), and the drive of the baling members (39a, 40a, 48, 58) of the rear housing (3) is produced by at least one second power divider (28) arranged on the side wall (7) of the rear housing (3), **characterised in that** means (26) are provided for transmitting the drive from the first power divider (24) to the second power divider (28), which, in addition to the rotary drive, have at least a degree of translational freedom.

2. A round baler according to claim 1, **characterised in that** an output shaft (25) of the first power divider (24) is connected to a drive shaft (27) of the second power divider (28) by a length-adjustable propeller shaft (26).

3. A round baler according to either one of the preceding claims, **characterised in that** the power dividers (24, 28) are in a mirror-image arrangement in relation to the pivoting axis (4) of the rear housing (3).

4. A round baler according to one or more of the preceding claims, **characterised in that** at least one output shaft (26) of the first power divider (24) rotates at the same speed as the drive shaft (25) of the first power divider (24).

5. A round baler according to one or more of the preceding claims, **characterised in that** the drive shaft (25) of the first power divider (24) forms the main drive shaft, which is directly connected to the power take-off shaft of a tractor by one or more propeller shafts (23) without the interposition of a transmission step.

6. A round baler according to one or more of the preceding claims, **characterised in that**, for the power-branched drive of the baling members (37a, 38a, 41 to 44 and 17; 39a, 40a, 48 and 58) inside the front housing (1) and/or inside the rear housing (3), at least one further power divider (52, 59) is connected downstream of the first power divider (24) and/or the second power divider (28) respectively.

7. A round baler according to one or more of the preceding claims, **characterised in that** the first power divider (24) has at least one further output shaft (51) in addition to the first output shaft (26) leading to the second power divider (28).

8. A round baler according to claim 7, **characterised in that** a second output shaft (51) has the function of driving one or more baling members (17) arranged below a material feed opening (18), while a third output shaft (29a, 35) drives the baling members (37a, 38a, 41 to 44) arranged above the material feed opening (18).

9. A round baler according to one or more of the preceding claims, **characterised in that** at least two transmission steps are provided between the main drive shaft (25) and the baling member (17, 37a, 38a, 39a, 40a, 41 to 44, 48, 58).

10. A round baler according to one or more of the preceding claims, **characterised in that** each power divider (24, 28, 52, 59) has at least one transmission step.

11. A round baler according to claim 10, **characterised in that** each power divider (24, 28, 52, 59) has at least one bevel-gear transmission (29, 33, 30, 34, 53, 54) acting as a transmission step.

12. A round baler according to one or more of the preceding claims, **characterised in that** a transmission step (35, 36, 37 to 40, 45, 46, 49, 55, 56, 57) is directly associated with each baling member (17, 37a, 38a, 39a, 40a, 41 to 44, 48, 58).

13. A round baler according to claim 12, **characterised in that** each baling member is drivable via at least one gearwheel transmission.

14. A round baler according to one or more of the preceding claims, **characterised in that** each power divider (24, 28, 52, 59) has a crown wheel (29, 30, 53) which engages with the drive shaft (25, 27, 51, 60) via a bevel-gear pinion (33, 34, 54) and is connected to an output shaft on which a spur gear (35, 36, 55) of a spur-gear transmission (37 to 40, 45, 46, 49, 55, 56, 57) of a baling member (17, 37a, 38a, 39a, 40a, 41 to 44, 48, 58) is fixed.

15. A round baler according to one or more of the preceding claims 6 to 14, **characterised in that** a drive shaft (51, 60) of a further power divider (52, 59) engages with the crown wheel (53) via a bevel-gear pinion (54) and, in the circumferential direction, is arranged so as to be angularly displaced in relation to the drive shaft (27) or the main drive shaft (25).

16. A round baler according to claim 14, **characterised in that** at least one output shaft (35, 36, 55) of a power divider (24, 28, 52, 59) is arranged so as to be parallel with and axially displaced in relation to the rotation axis (38b, 40b) of one or more baling members (37a, 38a, 39a, 40a).

17. A round baler according to one or more of the preceding claims, **characterised in that** a plurality of baling members (41, 42) are coupled via open spur-gear transmissions (45, 46).

18. A round baler according to claim 17, **characterised in that** a respective spur gear (46) of a spur-gear transmission (45, 46) is rotatably arranged on a journal (47) which is directly or indirectly fixed to a side wall (6).

19. A round baler according to one or more of the preceding claims, **characterised in that** one or more power dividers (24, 28, 52, 59) have closed, lubricant-filled casings.

20. A round baler according to one or more of the preceding claims, **characterised in that** the power dividers (24, 28 and 52, 59) are substantially structurally identical.

21. A round baler according to one or more of the preceding claims, **characterised in that** each power divider (24, 28, 52, 59) has an overload protection means.

22. A round baler according to one or more of the preceding claims, **characterised in that** a free-wheel clutch is associated with at least one power divider (52) or its drive shaft (51).

23. A round baler according to one or more of the preceding claims, **characterised in that** one or more drive or output shafts (51) are constructed without universal joints.

24. A round baler according to one or more of the preceding claims, **characterised in that** the drive for the feed members such as the cutting/conveying rotor (20) and/or the pick-up (19) is derived from the main drive shaft (25) upstream of the power divider (24) in the power flow direction.

25. A round baler according to claim 24, **characterised in that** the cutting/conveying rotor (20) is driven via two bevel-gear transmissions (61, 62, 64, 65) which are connected to one another by a shaft (63) with the interposition of an overload clutch (66) or by one or more spur-gear transmissions or by a combination of bevel-gear or spur-gear transmissions.

26. A round baler according to one or more of the preceding claims, **characterised in that** the baling members are formed as baling rollers (17, 37a, 38a, 39a, 40a, 41 to 44, 48, 58) which are fixedly but rotatably arranged in the side walls (6, 7) or as pivotable roller groups.

27. A round baler according to one or more of the preceding claims,
**characterised in that** one or more baling rollers have different circumferential speeds over parts of the baling-chamber circumference.

## Revendications

1. Presse à balles rondes pour des produits agricoles à tige, dont la chambre de compression (12) est délimitée sur la périphérie par des éléments de compression (17, 37a, 38a, 39a, 40a, 41 à 44, 48, 58), destinés à être entraînés, et du côté frontal par des parois latérales (6, 7) divisées en deux, comportant un carter de chambre de compression formé par un carter avant (1), solidaire du châssis, et un carter arrière (3) monté contre ce dernier de manière à pouvoir s'ouvrir en pivotant autour d'un axe de pivotement (4) horizontal, l'entraînement des éléments de compression (37a, 38a) du carter avant (1) étant dérivé d'au moins une première boîte de transfert (24), agencée dans la zone de la paroi latérale (6) du carter avant (1), et l'entraînement des éléments de compression (39a, 40a, 48, 58) du carter arrière (3) étant assuré par au moins une deuxième boîte de transfert (28) agencée sur la paroi latérale (7) du carter arrière (3), **caractérisée en ce qu'**il est prévu des moyens (26) pour la transmission de l'entraînement de la première boîte de transfert (24) à la deuxième boîte de transfert (28), lesquels, en plus de l'entraînement rotatif, présentent au moins un degré de liberté en translation.

2. Presse à balles rondes selon la revendication 1, **caractérisée en ce qu'**un arbre de sortie (25) de la première boîte de transfert (24) est relié, par l'intermédiaire d'un arbre de transmission (26) réglable en longueur, à un arbre d'entraînement (27) de la deuxième boîte de transfert (28).

3. Presse à balles rondes selon l'une quelconque des revendications précédentes, **caractérisée en ce que** les boîtes de transfert (24, 28) sont agencées symétriquement par rapport à l'axe de pivotement (4) du carter arrière (3).

4. Presse à balles rondes selon une ou plusieurs des revendications précédentes, **caractérisée en ce qu'**au moins un arbre de sortie (26) de la première boîte de transfert (24) est entraîné en rotation à la même vitesse que l'arbre d'entraînement (25) de la première boîte de transfert (24).

5. Presse à balles rondes selon une ou plusieurs des revendications précédentes, **caractérisée en ce que** l'arbre d'entraînement (25) de la première boîte de transfert (24) constitue l'arbre d'entraînement principal qui, par l'intermédiaire d'un ou de plusieurs arbres de transmission (23), est relié directement à la prise de force d'un tracteur, sans intercaler un élément d'engrenage.

6. Presse à balles rondes selon une ou plusieurs des revendications précédentes, **caractérisée en ce que** pour entraîner avec une dérivation de puissance les éléments de compression (37a, 38a, 41 à 44 et 17 ; 39a, 40a, 48 et 58) à l'intérieur du carter avant (1) et/ou à l'intérieur du carter arrière (3), au moins une boîte de transfert (52, 59) supplémentaire est montée respectivement en aval de la première boîte de transfert (24) et/ou de la deuxième boîte de transfert (28).

7. Presse à balles rondes selon une ou plusieurs des revendications précédentes, **caractérisée en ce que** la première boîte de transfert (24), outre le premier arbre de sortie (26) menant à la deuxième boîte de transfert (28), comporte au moins un arbre de sortie (51) supplémentaire.

8. Presse à balles rondes selon la revendication 7, **caractérisée en ce qu'**un deuxième arbre de sortie (51) est destiné à entraîner un ou plusieurs éléments de compression (17), agencés en dessous de l'ouverture d'admission des végétaux (18), tandis qu'un troisième arbre de sortie (29a, 35) entraîne les éléments de compression (37a, 38a, 41 à 44) agencés au-dessus de l'ouverture d'admission des végétaux (18).

9. Presse à balles rondes selon une ou plusieurs des revendications précédentes, **caractérisée en ce qu'**au moins deux éléments d'engrenage sont prévus entre l'arbre d'entraînement principal (25) et l'élément de compression (17, 37a, 38a, 39a, 40a, 41 à 44, 48, 58).

10. Presse à balles rondes selon une ou plusieurs des revendications précédentes, **caractérisée en ce que** chaque boîte de transfert (24, 28, 52, 59) comporte au moins un élément d'engrenage.

11. Presse à balles rondes selon la revendication 10, **caractérisée en ce que** chaque boîte de transfert (24, 28, 52, 59) comporte au moins un engrenage conique (29, 33, 30, 34, 53, 54) formant l'élément d'engrenage.

12. Presse à balles rondes selon une ou plusieurs des revendications précédentes, **caractérisée en ce qu'**un élément d'engrenage (35, 36, 37 à 40, 45, 46, 49, 55, 56, 57) est associé directement à chaque élément de compression (17, 37a, 38a, 39a, 40a, 41 à 44, 48, 58).

13. Presse à balles rondes selon la revendication 12, **caractérisée en ce que** chaque élément de compression est destiné à être entraîné par au moins un engrenage à roues dentées.

14. Presse à balles rondes selon une ou plusieurs des revendications précédentes, **caractérisée en ce que** chaque boîte de transfert (24, 28, 52, 59) comporte une couronne de différentiel (29, 30, 53) qui est en prise avec l'arbre d'entraînement (25, 27, 51, 60) par l'intermédiaire d'un pignon conique (33, 34, 54) et qui est reliée à un arbre de sortie, sur lequel est fixé un pignon droit (35, 36, 55) d'un engrenage droit (37 à 40, 45, 46, 49, 55, 56, 57) d'un élément de compression (17, 37a, 38a, 39a, 40a, 41 à 44, 48, 58).

15. Presse à balles rondes selon une ou plusieurs des revendications 6 à 14, **caractérisée en ce qu'**un arbre d'entraînement (51, 60) d'une boîte de transfert (52, 59) supplémentaire engrène avec la couronne de différentiel (53) par l'intermédiaire d'un pignon conique (54) et est agencé à une distance angulaire dans le sens périphérique par rapport à l'arbre d'entraînement (27) et par rapport à l'arbre d'entraînement principal (25).

16. Presse à balles rondes selon la revendication 14, **caractérisée en ce qu'**au moins un arbre de sortie (35, 36, 55) d'une boîte de transfert (24, 28, 52, 59) est agencé parallèlement et à distance axiale de l'axe de rotation (38b, 40b) d'un ou de plusieurs éléments de compression (37a, 38a, 39a, 40a).

17. Presse à balles rondes selon une ou plusieurs des revendications précédentes, **caractérisée en ce que** plusieurs éléments de compression (41, 42) sont couplés par l'intermédiaire d'engrenages droits (45, 46) ouverts.

18. Presse à balles rondes selon la revendication 17, **caractérisée en ce que**, dans chaque cas, un pignon droit (46) d'un engrenage droit (45, 46) est monté de manière rotative sur un tourillon (47) fixé directement ou indirectement sur une paroi latérale (6).

19. Presse à balles rondes selon une ou plusieurs des revendications précédentes, **caractérisée en ce qu'**une ou plusieurs boîtes de transfert (24, 28, 52, 59) comportent des carters d'engrenage fermés, remplis de lubrifiants.

20. Presse à balles rondes selon une ou plusieurs des revendications précédentes, **caractérisée en ce que** les boîtes de transfert (24, 28 et 52, 59) sont réalisées sensiblement de manière identique.

21. Presse à balles rondes selon une ou plusieurs des revendications précédentes, **caractérisée en ce que** chaque boîte de transfert (24, 28, 52, 59) comporte une sécurité anti-surcharge.

22. Presse à balles rondes selon une ou plusieurs des revendications précédentes, **caractérisée en ce qu'**un embrayage à roue libre est associé à au moins une boîte de transfert (52), ou à son arbre d'entraînement (51).

23. Presse à balles rondes selon une ou plusieurs des revendications précédentes, **caractérisée en ce qu'**un ou plusieurs arbres d'entraînement ou arbres de sortie (51) sont réalisés sans joint de Cardan.

24. Presse à balles rondes selon une ou plusieurs des revendications précédentes, **caractérisée en ce que** l'entraînement pour les organes d'alimentation, tels que le rotor de coupe et de transport (20) et/ou le ramasseur (19), est dérivé de l'arbre d'entraînement principal (25) en amont de la boîte de transfert (24) en référence au sens du flux des forces.

25. Presse à balles rondes selon la revendication 24, **caractérisée en ce que** l'entraînement du rotor de coupe de transport (20) est assuré par l'intermédiaire de deux engrenages coniques (61, 62, 64, 65), qui sont reliés l'un à l'autre par un arbre (63) en intercalant un embrayage anti-surcharge (66) ou par l'intermédiaire d'un ou de plusieurs engrenages droits ou par l'intermédiaire d'une combinaison d'engrenages coniques ou d'engrenages droits.

26. Presse à balles rondes selon une ou plusieurs des revendications précédentes, **caractérisée en ce que** les éléments de compression sont des rouleaux de compression (17, 37a, 38a, 39a, 40a, 41 à 44, 48, 58) montés dans les parois latérales (6, 7) de manière stationnaire mais rotative, ou des groupes de rouleaux pivotants.

27. Presse à balles rondes selon une ou plusieurs des revendications précédentes, **caractérisée en ce qu'**un ou plusieurs rouleaux de compression présentent différentes vitesses de rotation dans des zones partielles de la périphérie de la chambre de compression.
